# FASCICULE DE BREVET EUROPEEN

(11) **EP 0 389 308 B1**
(45) Date de publication et mention de la délivrance du brevet: **22.09.1993**
(21) Numéro de dépôt: 90400350.6
(22) Date de dépôt: 08.02.1990
(51) Int. Cl.: F16B 19/04, F16B 43/00

(54) **Moyens d'assemblage et procédés mettant en oeuvre lesdits moyens**
Befestigungsmittel und Verfahren zur Ausführung besagter Mittel
Fastening means and methods for bringing into operation said means

(30) Priorité: 20.03.1989 FR 8903597
(43) Date de publication de la demande: 26.09.1990
(73) Titulaire: BOST S.A., F-25820 Laissey (FR)
(72) Inventeur: Dessirier, Charles, F-25360 Bouclans (FR)
(74) Mandataire: Rodhain, Claude

(56) Documents cités:
- FR-A- 340 219
- FR-A- 363 835
- FR-A- 2 200 069
- US-A- 3 505 923
- US-A- 3 551 015
- US-A- 4 202 243

## Description

La présente invention concerne un ensemble selon le préambule de la revendication 1 et un procédé d'assemblage d'un tel ensemble.

On connaît dans l'état de la technique divers moyens permettant de créer une liaison entre deux pièces afin de les solidariser définitivement ou afin de préserver au moins un degré de liberté, par exemple une rotation ou un glissement relatif des deux pièces.

Ainsi, le document US-A-4 202 243 décrit un ensemble comprenant deux pièces dont chacune est munie d'un orifice et qui sont liées entre elles par un rivet. Pour permettre à ces deux pièces, après leur assemblage, une rotation de l'une par rapport à l'autre, le rivet est formé de façon à ce que sa tête subisse une déformation telle que sa tête ne repose sur la pièce correspondante qu'à sa périphérie. Ceci implique un frottement de la périphérie de la tête sur la pièce correspondante lors d'une rotation relative des deux pièces assemblées.

Du document US-A-3 551 015 on connaît un assemblage fixe de deux pièces à l'aide d'un rivet. Dans cet ensemble, la partie dépassante du rivet destiné à être écrasée lors du rivetage est munie d'une rondelle sur laquelle la partie dépassante du rivet est écrasée.

Le document FR-A-340 219 divulgue également l'utilisation d'une rondelle munie d'un orifice tronconique. Cependant, ce moyen d'assemblage est destiné particulièrement au protecteur et anti-dérapant des bandages pneumatiques.

Ces documents ne décrivent pas d'application pour l'assemblage de deux pièces destinées à être assemblées avec un degré de liberté entre elles.

Les rivets permettent d'assembler deux pièces de façon particulièrement économique et rapide. Ils présentent néanmoins l'inconvénient de nécessiter dans la plupart des cas des opérations supplémentaires de finissage afin d'obtenir un aspect esthétique satisfaisant.

Par ailleurs, si l'emploi de rivets est possible pour réunir deux pièces devant conserver un degré de liberté entre elles, la précision de l'assemblage est insuffisante pour garantir un jeu parfaitement contrôlé. Ainsi, des pinces dont les deux branches sont réunies par des rivets présentent souvent un frottement inacceptable en raison d'un mauvais contrôle du jeu subsistant après la mise en place du rivet.

La présente invention a pour objet de remédier à cet inconvénient en proposant un moyen d'assemblage permettant de solidariser définitivement ou avec un degré de liberté deux pièces de façon aussi simple et économique qu'un rivet, avec un meilleur contrôle du jeu subsistant et un aspect esthétique plus satisfaisant.

La présente invention concerne plus particulièrement un ensemble selon la revendication 1.

Après mise en place du rivet, des pièces à assembler et de la rondelle, on exerce une pression axiale à l'aide d'une riveteuse à bouterolle, de préférence à mouvement hélicoïdal afin de déformer l'extrémité de la tige jusqu'à ce qu'elle vienne remplir l'orifice de la rondelle.

L'assemblage ainsi réalisé présente une grande solidité et un degré de finition tout à fait satisfaisant sans aucun recours à une opération supplémentaire telle qu'un usinage ou polissage.

De préférence,la rondelle comporte un orifice dont les bords latéraux convergent ou encore présentent un décollement latéral.

La section de l'orifice de la rondelle et de la tige du rivet peuvent bien entendu être quelconques par exemple, carrées, triangulaires ou hexagonale mais selon une variante avantageuse, la tige est cylindrique et l'orifice est conique ou constitué de deux alésages cylindriques coaxiaux de diamètres différents.

La tige est constituée d'au moins deux tronçons coaxiaux, la section transversale de chaque tronçon correspondant sensiblement à la section de l'orifice de l'une des pièces à assembler et la hauteur dudit tronçon étant au moins égale à l'épaisseur de ladite pièce à assembler. Cette variante permet de réaliser un assemblage laissant subsister un degré de liberté entre les pièces assemblées. Ce degré de liberté peut être soit une rotation dans le cas de rivets cylindriques, ou une translation dans le cas de rivets à section rectangulaire.

Avantageusement, le rivet et la rondelle sont réalisés en acier destiné à la frappe à froid.Bien entendu d'autres matériaux peuvent être envisagés, et en particulier des alliages ou des matières moulables déformables à chaud ou à froid.

La présente invention concerne également un procédé d'assemblage selon la revendication 2.

Selon une variante préférée,on procède à un traitement préalable des moyens d'assemblage et/ou des pièces à assembler. Ce traitement est généralement constitué par un traitement thermique. L'avantage qui en découle est important car on supprime ainsi toute contrainte susceptible de modifier le jeu subsistant entre deux pièces à assembler après l'assemblage.

La présente invention sera mieux comprise dans la description qui va suivre,en association avec les figures où :
La figure 1 représente une vue en coupe du moyen d'assemblage lors de la mise en place;
La figure 2 représente une vue en coupe de l'assemblage obtenu.

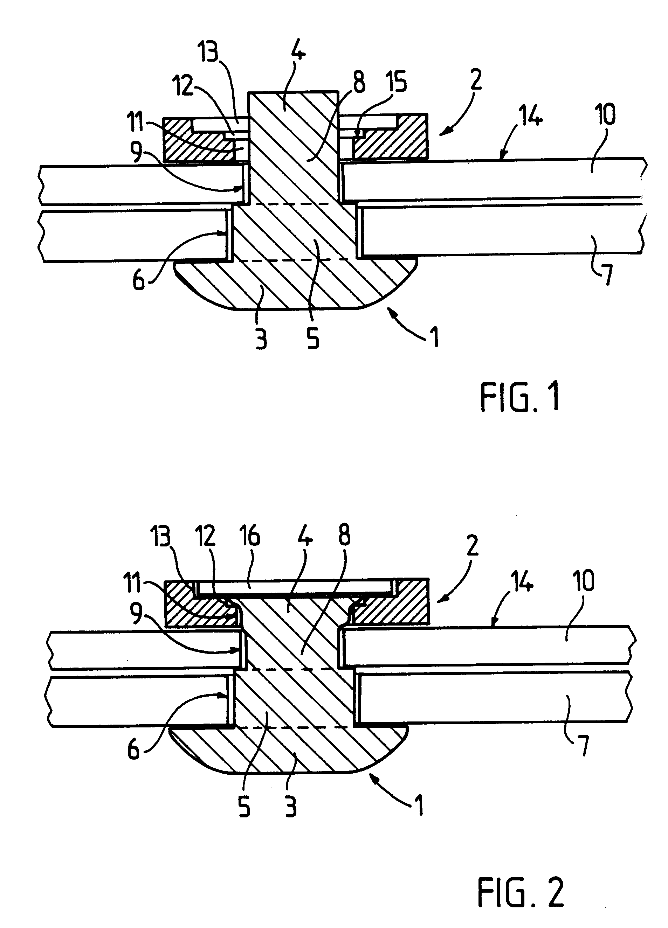

Le moyen d'assemblage tel que représenté en figure 1 est constitué par un rivet 1 et d'une rondelle 2. Le rivet 1 comporte une tête 3 et une tige 4. La tige 4 est constituée par un premier tronçon cylindrique 5, d'un diamètre légèrement inférieur au diamètre de l'orifice 6 pratiqué dans la première pièce 7 à assembler.

La tige 4 comporte un deuxième tronçon 8 d'un diamètre légèrement inférieur à l'orifice 9 de la deuxième pièce à assembler 10.

La rondelle 2 est constituée par un disque comportant un orifice constitué de trois alésages 11, 12, 13 de diamètre croissant. Le volume des deux premiers alésages 11, 12 correspond sensiblement au volume de l'extrémité de la tige 4 du rivet dépassant la surface extérieure 14 de la plaque 10 à assembler.

Lorsque le rivet 1 et la rondelle 2 sont en place on exerce une pression axiale sur le rivet, de préférence à l'aide d'une riveteuse à bouterolle oscillante, de façon à écraser l'extrémité de la tige 4 jusqu'à ce qu'elle remplisse les deux premiers alésages 11, 12 de la rondelle 2.

Comme représenté en figure 2, on réalise ainsi une solidarisation définitive de la rondelle avec le rivet. Dans la variante représentée, la pièce inférieure 7 conserve un degré de liberté en rotation car la hauteur du premier tronçon 5 de la tige 4 du rivet 1 est supérieure à l'épaisseur de la pièce 7. Le jeu subsistant entre les deux pièces 7 et 10 peut être ajusté avec beaucoup de précision en choisissant avec précision la hauteur du premier tronçon 5.

Dans la variante représentée, le troisième alésage 13, de plus grand diamètre permet de disposer après écrasement de l'extrémité 4 de la tige du rivet 1 un petit disque 15 de décoration ou de repérage.

Selon l'exemple particulier, le rivet 1 et la rondelle sont constitués en acier de type 38 B 3 trempé avant assemblage à 360° dans l'huile. Ce traitement est complété par un revenu à 350° pendant une demi-heure.

Le rivet 1 comporte une tête d'un diamètre de 16 mm. La tige 4 est constituée par un premier tronçon cylindrique d'un diamètre de 8,4 mm et d'un deuxième tronçon de 6,5 mm.

La hauteur du premier tronçon est de 3,8 mm et la hauteur du deuxième tronçon de 7,5 mm.

L'épaisseur des pièces à assembler est de 3,7 mm.

La rondelle présente un diamètre extérieur de 18 mm et comporte un orifice constitué de trois alésages d'un diamètre respectivement de 8 mm, 9,6 mm et 14 mm. La hauteur de l'alésage du plus petit diamètre est de 1,9 mm, l'épaisseur des suivants est respectivement de 0,5 et 0,6 mm.

L'écrasement de l'extrémité de la tige se fait par une riveteuse à bouterolle oscillante , exerçant une pression d'environ 1 500 kg. Un disque de décoration en aluminium auto-collant est mis en place dans l'alésage du plus grand diamètre après l'assemblage.

## Revendications

1. Ensemble comprenant deux pièces (7, 10) munies d'orifices (6,9) destinées à être liées entre elles par un moyen d'assemblage laissant subsister un degré de liberté entre les pièces assemblées, du type comprenant un rivet (1) comportant une tête (3) et une tige (4) dont l'extrémité est écrasée par compression, la tige (4) étant constituée d'au moins deux tronçons coaxiaux de diamètres différents (5, 8), la section transversale de chaque tronçon (5, 8) correspondant sensiblement à la section de l'orifice (6, 9) de l'une des pièces (7, 10) à assembler, la hauteur du tronçon (5) de plus faible section transversale étant supérieure à l'épaisseur de la pièce à assembler correspondante (7), caractérisé en ce que le moyen d'assemblage comporte en outre une rondelle (2) percée d'un orifice (11, 12, 13) constitué d'au moins deux alésages (11,12) cylindriques, coaxiaux de diamètre différent, l'orifice étant destiné à recevoir l'extrémité écrasée de la tige (4).

2. Procédé d'assemblage avec un degré de liberté de deux pièces (7, 10) munies d'orifices (7, 9) destinées à être liées entre elles par un moyen d'assemblage du type comprenant un rivet comportant une tête et une tige dont l'extrémité est écrasée par compression, procédé selon lequel on perce dans chaque pièce un orifice (6,9) d'un diamètre correspondant sensiblement à celui d'un tronçon d'un rivet dont la tige est constituée d'au moins deux tronçons, on introduit un rivet (1) dans lesdits orifice et on écrase la partie dépassante de la tige (4), caractérisé en ce que l'on place, avant d'écraser ladite extrémité dépassante, sur la partie dépassante de la tige (4) du rivet (1) une rondelle munie d'un orifice constitué d'au moins deux alésages (11, 12) cylindriques, coaxiaux de diamètres différents et dont les deux alésages les plus petits ont, ensemble, un volume au plus égal au volume de la partie dépassante de la tige.

3. Procédé d'assemblage selon la revendication précédante, caractérisé en ce l'on procède préalablement à l'assemblage d'un traitement thermique du moyen d'assemblage.

## Patentansprüche

1. Anordnung, bestehend aus zwei Teilen (7, 10), die mit Öffnungen (6, 9) versehen sind und die miteinander durch eine Montageeinrichtung verbunden werden sollen, die einen Freiheitsgrad zwischen den montierten Teilen beläßt, bestehend aus einem Niet (1) mit einem Kopf (3) und einem Schaft (4), dessen Ende flachgedrückt ist und der aus wenigstens zwei koaxialen Abschnitten (5, 8) unterschiedlicher Durchmesser besteht, wobei der Querschnitt jedes Abschnitts (5, 8) im wesentlichen dem Querschnitt der Öffnung (6, 9) des einen zu montierenden Teils (7, 10) entspricht, und der Abschnitt (5) mit dem kleineren Querschnitt größer als die Dicke des entsprechenden zu montierenden Teils (7) ist,
**dadurch gekennzeichnet**, daß
die Montageeinrichtung außerdem eine Unterlegscheibe (2) aufweist, die von einer Öffnung (11, 12, 13) durchsetzt ist, die aus wenigstens zwei koaxialen Zylinderbohrungen (11, 12) unterschiedlichen Durchmessers besteht, wobei die Öffnung dazu bestimmt ist, das flachgedrückte Ende des Schaftes (4) aufzunehmen.

2. Verfahren zur Montage mit einen Freiheitsgrad von zwei Teilen (7, 10), die mit Öffnungen (7, 9) versehen sind, und die durch eine Montageeinrichtung miteinander verbunden werden sollen, die einen Niet mit einen Kopf und einem Schaft aufweist, dessen Ende flachgedrückt ist, bei dem in jedes Teil eine Öffnung (6, 9) mit einen Durchmesser gebohrt wird, der im wesentlichen dem eines Abschnittes eines Niets entspricht, dessen Schaft aus wenigstens zwei Abschnitten besteht, ein Niet (1) in die Öffnung eingesetzt und der überstehende Teil des Schaftes (4) flachgedrückt wird,
**dadurch gekennzeichnet**, daß
vor dem Flachdrücken des überstehenden Endes auf dem überstehenden Teil des Schaftes (4) des Niets (1) eine Unterlegscheibe angeordnet wird, die mit einer Öffnung versehen ist, die aus wenigstens zwei koaxialen Zylinderbohrungen (11, 12) unterschiedlicher Durchmesser besteht und deren beide kleinste Bohrungen zusammen ein Volumen haben, das höchstens gleich dem Volumen des überstehenden Teils des Schaftes ist.

3. Montageverfahren nach dem vorherigen Anspruch,
**dadurch gekennzeichnet**, daß
vor der Montage eine Wärmebehandlung der Montageeinrichtung durchgeführt wird.

## Claims

1. Assembly comprising two parts (7,10) provided with orifices (6,9) designed to be interconnected by an assembly means leaving a degree of liberty between the parts thus assembled, of the type comprising a rivet (1) having a head (3) and a shank (4) of which the end is crushed by compression, the shank (4) consisting of at least two coaxial portions of different diameters, (5,8) the cross section of each portion (5,8) largely corresponding to the cross section of the orifice (6,9) of one of the parts (7,10) to be assembled, the height of the portion (5) with the minimum cross section being greater than the thickness of the corresponding part (7) to be assembled, characterized by the fact that the assembly means also comprises a washer (2) provided with an orifice (11,12,13) consisting of at least two cylindrical borings (11,12) which are coaxial and of different diameter, the orifice being designed to accommodate the crushed end of the shank (4).

2. Process for assembling with a degree of liberty two parts (7,10) having orifices (7,9) designed to be interconnected by an assembly means of the type comprising a rivet consisting of a head and a shank of which the end is crushed by compression, by which process each part is provided with an orifice (6,9) of a diameter largely corresponding to that of a portion of a rivet of which the shank consists of at least two portions, a rivet (1) being introduced into the said orifices and the projecting part of the shank (4) being crushed, characterized by the fact that before the crushing of the said projecting end of the shank (4) of the rivet (1) the said end is fitted with a washer having an orifice consisting of at least two coaxial cylindrical borings (11,12) of different diameters, the combined volume of the two smallest borings thereof not exceeding the volume of the projecting part of the shank.

3. Assembly process in accordance with the preceding claim, characterised by the fact that before the assembly operation the assembly means undergoes a thermal treatment.
